# EUROPEAN PATENT APPLICATION

(11) **EP 1 722 074 A2**
(43) Date of publication of application: **15.11.2006**
(21) Application number: 06252362.6
(22) Date of filing: 04.05.2006
(51) Int. Cl.: F01D 25/20, F01D 25/18

(54) **Lubrication system for a gas turbine engine and corresponding gas turbine**

(30) Priority: 06.05.2005 US 124333
(71) Applicant: General Electric Company, Schenectady, NY 12345 (US)
(72) Inventor: Bruce, Robert William, Loveland, Ohio 45140 (US)
(74) Representative: Bedford, Grant Richard

(57) **Abstract**

A method of lining an interior surface (184) of a lubrication system (100) includes lining at least a portion of an interior surface of a metallic piping component (180) with a protective barrier (210) that is configured to form an aluminum oxide, and coupling the piping component to the lubrication system such that a lubrication fluid is channeled therethrough, and such that the aluminum oxide is formed when exposed to the lubrication fluid.

## Description

This invention relates generally to gas turbine engines and more particularly, to protecting lubrication oil supply and scavenge components used within gas turbine engines.

A gas turbine engine typically includes at least one bearing assembly that rotatably supports a shaft. The bearing assembly is lubricated with oil. Heat from the bearing assembly and other engine components is absorbed and dissipated by the oil. Typically, bearing assemblies are housed within sumps that include an oil supply jet that supplies lubricating oil under pressure from an external pump to the bearing assemblies, and an external scavenge pump that removes lubricating oil from the sump. In at least some known gas turbine engines, the scavenge pump channels the return oil through a filter prior to returning the oil to a tank or reservoir.

Within at least some applications, such as aircraft propulsion systems, the lube oil supply and scavenge systems are fabricated from a metallic material. For example, at least some known lube oil supply and scavenge systems are fabricated utilizing a stainless steel material and/or Inconel (INCO) material, such as INCO 625. During engine operation, the metallic material utilized to fabricate portions of the lube oil supply and scavenge systems may experience coking. Coking, as used herein, is defined as the formation of organic deposits on liquid or vapor wetted surfaces, such as hot areas of the lubrication system. Organic deposits often form as crusty or gel-like deposits that may clog the piping systems, the lubrication nozzles, and/or the lubrication filters.

Accordingly, at least one known manufacture has developed a specially formulated lube oil that facilitates reducing the quantity of coking within the lube oil piping systems. However, while a specially formulated lube oil may facilitate reducing coking tendencies, the effectiveness of the specially formulated lube oil to satisfactorily perform other lubrication requirements such as, load carrying ability, for example, may be reduced. Moreover, utilizing the specially formulated lube oil may facilitate reducing the variety of lube oils that may be used within the gas turbine engine is reduced. Specifically, the operator's choice of manufacturers may be reduced when purchasing specially formulated lube oil since the specially formulated lube oil may not be available in all locations where a gas turbine engine is operated. Therefore, operating a gas turbine engine that utilizes a specially formulated lube oil to facilitate reducing corrosion within the piping systems may also increase the operating cost of the gas turbine engine.

In one aspect, a method of lining an interior surface of a lubrication system is provided. The method includes lining at least a portion of an interior surface of a metallic piping component with a protective barrier that is configured to form an aluminum oxide, and coupling the piping component to the lubrication system such that a lubrication fluid is channeled therethrough, and such that the aluminum oxide is formed when exposed to the lubrication fluid.

In another aspect, a gas turbine engine lubrication system is provided. The gas turbine engine lubrication system includes a plurality of piping components coupled together to form the lubrication system, and at least one oil supply pump configured to channel a lubrication fluid through the plurality of piping components, at least a portion of the piping components comprising a protective barrier that is coupled to an interior surface of the piping components, the protective barrier configured to form an aluminum oxide.

In a further aspect, a gas turbine engine is provided. The gas turbine engine includes a plurality of bearings, and a lube oil supply and scavenge system coupled to the gas turbine engine and configured to lubricate the plurality of bearings, the lube oil supply and scavenge system including at least one sump cavity, an oil supply source, and a plurality of piping components coupled together to form the oil supply and scavenge system, at least a portion of the piping components comprise a protective barrier that is coupled to an interior surface of the piping components, the protective barrier configured to form an aluminum oxide.

Various aspects and embodiments of the invention will now be described in conjunction with the accompanying drawings, in which:
Figure 1 is schematic illustration of an exemplary gas turbine engine;
Figure 2 is a schematic illustration of an oil supply and scavenge system for a gas turbine engine;
Figure 3 is a perspective view of an exemplary metallic piping component that can be used to the fabricate the lubrication system shown in Figure 2;
Figure 4 is a flow chart illustrating an exemplary method of lining an interior surface of the lubrication system shown in Figure 2;
Figure 5 is a perspective view of an exemplary piping component that includes a first protective barrier; and
Figure 6 is a perspective view of an exemplary piping component that includes a second protective barrier.

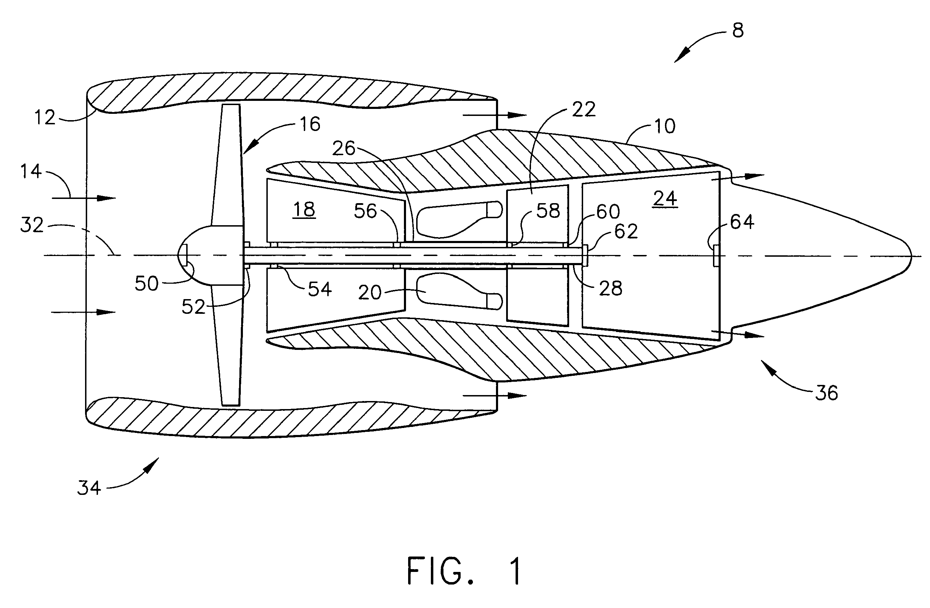

Figure 1 is a schematic illustration of an exemplary gas turbine engine assembly 8 that includes a high bypass, turbofan gas turbine engine 10 having in serial flow communication an inlet 12 for receiving ambient air 14, a fan 16, a compressor 18, a combustor 20, a high pressure turbine 22, and a low pressure turbine 24. High pressure turbine 22 is coupled to compressor 18 using a first shaft 26, and low pressure turbine 24 is coupled to fan 16 using a second shaft 28. Gas turbine engine 10 has an axis of symmetry 32 extending from an upstream side 34 of gas turbine engine 10 aft to a downstream side 36 of gas turbine engine 10.

In the exemplary embodiment, gas turbine engine 10 also includes a first fan bearing assembly 50, a second fan bearing assembly 52, a first compressor bearing assembly 54, a second compressor bearing assembly 56, a first high pressure turbine bearing assembly 58, a second high pressure turbine bearing assembly 60, a first low-pressure turbine bearing assembly 62, and a second low-pressure turbine bearing assembly 64, that are each configured to provide at least one of axial and/or rotational support to the respective components.

During operation, airflow (P3) enters gas turbine engine 10 through inlet 12 and is compressed utilizing compressor 18. The compressed air is channeled downstream at an increased pressure and temperature to combustor 20. Fuel is introduced into combustor 20 wherein the air (PS3) and fuel are mixed and ignited within combustor 20 to generate hot combustion gases. Specifically, pressurized air from compressor 18 is mixed with fuel in combustor 20 and ignited thereby generating combustion gases. Such combustion gases are then utilized to drive high pressure turbine 22 which drives compressor 18 and to drive low pressure turbine 24 which drives fan 16.

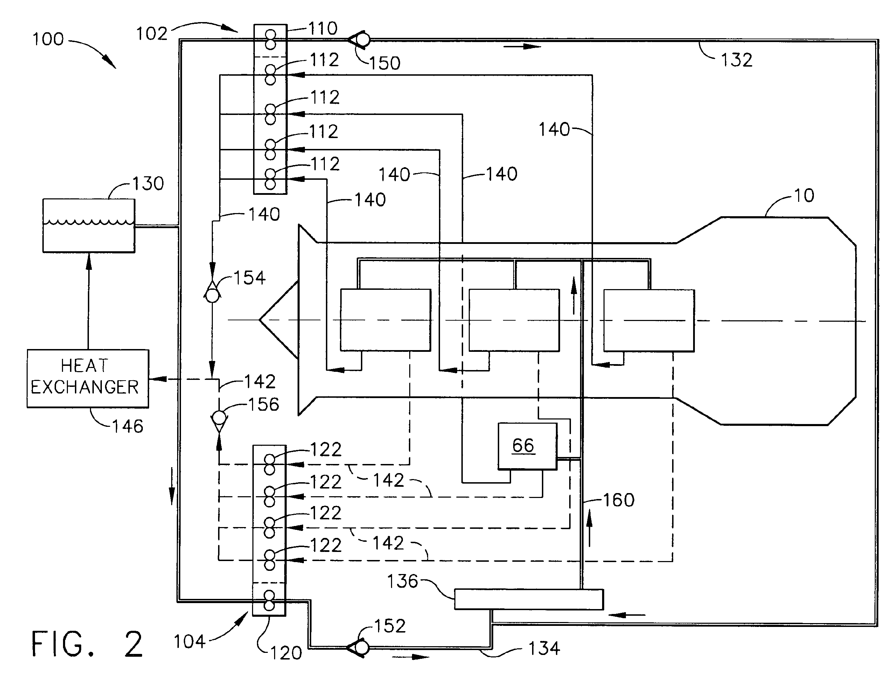

Figure 2 is a schematic illustration of an lubrication oil supply and scavenge system 100 that may be used with a gas turbine engine, such as gas turbine engine 10 (shown in Figure 1). System 100 includes a first oil supply/scavenge assembly 102 and a second oil supply/scavenge assembly 104 that are each configured to supply lubrication oil to a plurality of gas turbine engine 10 components such as, but not limited to, bearing assemblies 50, 52, 54, 56, 58, 60, 62, and 64, and a gearbox 66. Accordingly, and in an exemplary embodiment, first oil supply/scavenge pump assembly 102 includes a first lube oil supply pump 110 and a plurality of lube oil scavenge pumps 112, and second oil supply/scavenge pump assembly 104 includes a second lube oil supply pump 120 and a plurality of lube oil scavenge pumps 122. System 100 also includes an oil supply source 130, a first oil supply manifold 132 that is coupled to lube oil supply pump 110, a second oil supply manifold 134 that is coupled to lube oil supply pump 120, and an oil filter 136.

During operation, at least one of first and second oil supply pumps 110 and/or 120 are activated such that lubrication oil is channeled from oil supply source 130, through at least one of first and second supply manifolds 132 and/or 134, to oil filter 136. The oil is then channeled from oil filter 136 to gas turbine engine 10 to facilitate lubricating various components within gas turbine engine 10.

System 100 also includes a plurality of scavenge oil components to facilitate withdrawing scavenge oil from gas turbine engine 10, and channeling the withdrawn oil back to reservoir 130. More specifically, in this embodiment, lubrication oil supply and scavenge system 100 also includes a first plurality of scavenge lines 140 that are connected between gas turbine engine 10 and scavenge pumps 112, and a second plurality of scavenge lines 142 that are connected between gas turbine engine 10 and scavenge pumps 122. More, specifically, scavenge lines 140 and 142 are coupled to gas turbine engine 10, such that oil channeled to a plurality of bearing sumps within gas turbine engine 10 can be channeled or scavenged back to supply source 130 utilizing scavenge pumps 112 and 122, respectively, via a heat exchanger 146.

In one embodiment, system 100 also includes a plurality of flow activated check valves 150, 152, 154, 156. In this embodiment, check valve 150 is located in supply circuit branch 132 adjacent to and downstream of first oil pump 110, check valve 152 is located in supply circuit branch 134 adjacent to and downstream of second oil pump 120, check valve 154 is located in scavenge circuit branch 140 adjacent to and downstream of first scavenge pumps 112, and check valve 156 is located in scavenge circuit branch 142 adjacent to and downstream of second scavenge pumps 122. A pressure measuring instrument (not shown) is located in a supply circuit 160 downstream of oil filter 136 and is configured to provide an alert if there is a failure of either first oil pump 110 and/or second oil pump 120.

The primary purpose of scavenge circuit check valves 154 and 156 is to prevent scavenge oil from reversing flow direction in the event of a failure of first oil pump 110 and/or second oil pump 120. Similarly, the primary purpose of supply check valves 150 and 152 is to prevent supply oil from reversing flow direction in the event of a failure of first oil pump 110 and/or second oil pump 120.

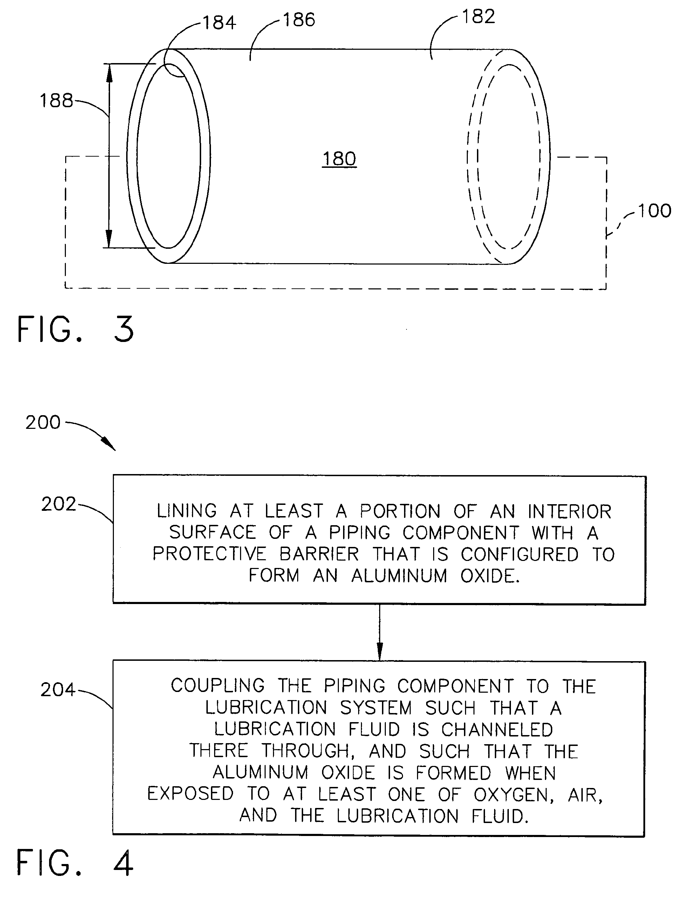

Figure 3 is a perspective view of an exemplary metallic piping component 180 that can be used to fabricate system 100 shown in Figure 2. In an exemplary embodiment, at least a portion of system 100 is fabricated utilizing a plurality of piping components 180 that are each coupled together, using a welding or brazing procedure, for example. In this exemplary embodiment, piping component 180 is fabricated using a metallic material 182 such as, but not limited to INCO 625 and/or stainless steel, for example. Piping component 180 has a substantially cylindrical cross-sectional profile, i.e. a tubular profile, that includes an inner surface 184, outer surface 186, and an interior diameter 188. In this embodiment, at least a portion of lubrication system 100 is fabricated utilizing piping components 180 that are fabricated from a metallic material 182 that at least partially includes at least one of a nickel material, such as INCO 625, and/or a stainless steel material, for example.

Figure 4 is a flow chart illustrating an exemplary method 200 of lining an interior surface of at least a portion of a lubrication system, such as exemplary lubrication system 100, shown in Figure 2. In the exemplary embodiment, lubrication system 100 includes a plurality of piping components 180 that may be any portion of manifolds 132, 134, 140, 142, and/or 160, for example. Accordingly, as described herein, method 200 may be utilized to line the inner surface of any portion of a gas turbine lube oil supply and scavenge system, such as exemplary lube oil supply and scavenge system 100 shown in Figure 2.

In the exemplary embodiment, method 200 includes lining 202 at least a portion of an interior surface 184 of piping component 180 with a protective barrier that is configured to form an aluminum oxide, and coupling 204 piping component 180 to lubrication system 100 such that a lubrication fluid is channeled therethrough, and such that an aluminum oxide layer is formed on an interior surface of the protective barrier when exposed to at least one of oxygen, air and/or lubrication fluid.

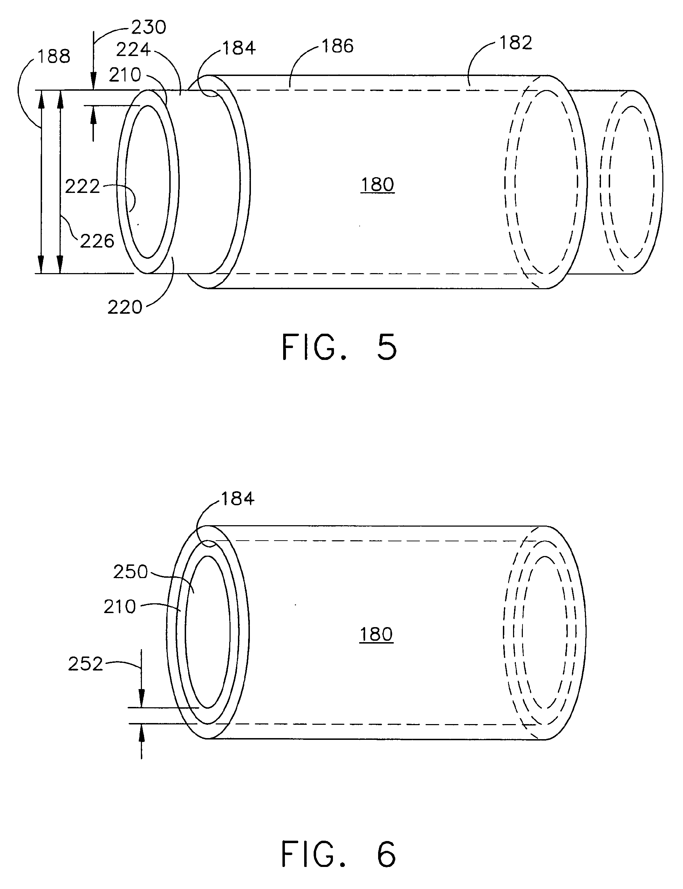

Figure 5 illustrates an exemplary piping component 180 that includes a protective barrier 210 formed in accordance with method 200. In the exemplary embodiment, protective barrier 210 is a tubing section. Accordingly, and in one exemplary embodiment, at least a portion of an interior surface of lubrication system 100 includes a relatively thin-walled tubing section 220 that is inserted at least partially within component 180. In one embodiment, tubing section 180 has a substantially cylindrical cross-sectional profile, i.e. a tubular profile, that includes an inner surface 222, an outer surface 224, and an outside diameter 226, that is less than inside diameter 188 of piping component 180. In one embodiment, tubing section 220 is fabricated from a corrosion resistant machinable aluminum alloy such as, Al 1060, Al 1100, Al 3003, Alcad 3003, Haynes 214, and/or Haynes 1233, for example. In the exemplary embodiment, tubing section 220 is fabricated from any material that produces an aluminum oxide when inner surface 222 is exposed to air, lubrication fluid, and/or water.

In the exemplary embodiment, tubing section 220 is inserted at least partially into component 180. Tubing section 220 is then heated and pressurized such that tubing section 220 expands. More specifically, tubing section 220 is pressurized until tubing section outer surface 224 contacts piping component interior surface 184, i.e. clads to interior surface 184, and thus is expanded until tubing section outside diameter 226 is approximately equal to piping component inside diameter 188. Pressurizing tubing section 220 until tubing section outer surface 224 contacts piping component interior surface 184 facilitates forming a good thermal contact between piping component 180 and tubing section 220, and also facilitates preventing the lubrication fluid from entering between tubing section outer surface 224 and piping component inner surface 184.

In the exemplary embodiment, method 200 also includes anodizing tubing section 220 after tubing section 220 has been at least partially inserted into piping component 180. Anodize, as used herein, is defined as a method to coat a metal with a protective film using electrolysis. Accordingly, in one embodiment, piping component 180 is subjected to an electrolytic action to coat the interior surface of piping component 180 with a protective film. Accordingly, and in the exemplary embodiment, interior surface 184 of piping component 180 is anodized with an aluminum coating such that when lubricant is channeled through piping component 180, an aluminum oxide will form on interior surface 184.

In the exemplary embodiment, tubing section 220 has a thickness 230 that is selected to enable tubing section 220 to operate within system 100 when system 100 is operating between approximately 0 psi (pounds per square inch) and approximately 5000 psi, and between approximately -40 degrees F (Fahrenheit) and approximately 700 degrees F operating temperatures.

Figure 6 illustrates an exemplary piping component 180 that includes a protective barrier 210 formed in accordance with method 200. In the exemplary embodiment, protective barrier 210 is a coating material. Accordingly, and in one exemplary embodiment, lining at least a portion of an interior surface of lubrication system 100 includes applying a coating material 250 to interior surface 184 of piping component 180. In one embodiment, coating material 250 is applied to piping component 180 while piping component 180 is installed within system 100. In another embodiment, coating material 250 is applied to piping component 180, and piping component 180 is then installed within system 100. In a further embodiment, piping component 180 is dipped into a container of coating material 250, and piping component 180 is then installed within system 100.

In the exemplary embodiment, coating material 250 at least partially includes an aluminum oxide forming material such as, but not limited to, Al 1100 and/or Al 1135. In the exemplary embodiment, coating material 250 is deposited on interior surface 184 until coating material 250 is between approximately 0.25 micron and approximately 25 micron in thickness 252.

The above described methods and apparatuses are cost-effective and highly reliable. The oil supply and scavenge system includes a plurality of piping components wherein at least some of the components are lined with a protective barrier that is configured to form an aluminum oxide when the lubrication fluid is channeled therethrough.

More specifically, known gas turbine lubrication systems are fabricated, at least in part, using metallic piping components that are fabricated using a metallic material that forms an chromium oxide. Accordingly, during operation, coke is formed on at least some of the interior surfaces of the known lubrication systems. Coke formations may cause clogging of the piping system itself, the lubrication nozzles, and/or the gas turbine lubrication filters.

Accordingly, the protective barriers described herein provide an aluminum oxide surface on an interior of the piping system that facilitates reducing coke deposits. Moreover, the aluminum oxide surface provides a protective coating that forms a protective aluminum oxide scale that is self-healing. More specifically, if the protective coating is damaged during piping fabrication or installation, the protective coating will "regrow" that portion of the protective aluminum oxide coating that was damaged. Moreover, the protective coating described herein, facilitates increasing the types of lubrication fluid that can be used within the gas turbine engine, such as lubricants that have an increased load carrying ability, higher levels of additives, and/or additives that increase the load carrying ability.

Various embodiments of an oil supply and scavenge system are described above in detail. The systems are not limited to the specific embodiments described herein, but rather, components of the system may be utilized independently and separately from other components described herein.

While the invention has been described in terms of various specific embodiments, those skilled in the art will recognize that the invention can be practiced with modification within the spirit and scope of the claims.

### PARTS LIST

| | |
|---|---|
| 8 | Gas turbine engine assembly |
| 10 | Gas turbine engine |
| 12 | Inlet |
| 14 | Ambient air |
| 16 | Fan |
| 18 | Compressor |
| 20 | Combustor |
| 22 | High pressure turbine |
| 24 | Low pressure turbine |
| 26 | First shaft |
| 28 | Second shaft |
| 32 | Axis of symmetry |
| 34 | Upstream side |
| 36 | Downstream side |
| 50 | First fan bearing assembly |
| 52 | Second fan bearing assembly |
| 54 | First compressor bearing assembly |
| 56 | Second compressor bearing assembly |
| 58 | High pressure turbine bearing assembly |
| 60 | Second high pressure turbine bearing assembly |
| 62 | First low-pressure turbine bearing assembly |
| 64 | Second low-pressure turbine bearing assembly |
| 66 | Gearbox |
| 100 | Lubrication oil supply and scavenge system |
| 102 | First oil supply /scavenge pump assembly |
| 104 | Second oil supply /scavenge pump assembly |
| 110 | First lube oil supply pump |
| 112 | Lube oil scavenge pumps |
| 120 | Second lube oil supply pump |
| 122 | Lube oil scavenge pumps |
| 130 | Oil supply source |
| 132 | Manifolds or supply circuit branch |
| 134 | Second oil supply manifold or supply circuit branch |
| 136 | Oil filter |
| 140 | Scavenge lines or scavenge circuit branch |
| 142 | Scavenge lines or scavenge circuit branch |
| 146 | Heat exchanger |
| 150 | Check valve |
| 152 | Check valve |
| 154 | Check valve |
| 156 | Check valves |
| 160 | Supply circuit |
| 180 | Piping component |
| 182 | Metallic material |
| 184 | Inner surface |
| 186 | Outer surface |
| 188 | Interior diameter |
| 200 | Method |
| 202 | Lining |
| 204 | Coupling |
| 210 | Protective barrier |
| 220 | Tubing section |
| 222 | Inner surface |
| 224 | Outer surface |
| 226 | Outside diameter |
| 230 | Tube section thickness |
| 250 | Coating material |
| 252 | Coating material thickness |

## Claims

1. A gas turbine engine lubrication system (100) comprising:
a plurality of piping components (180) coupled together to form said lubrication system; and
at least one oil supply pump (110) configured to channel a lubrication fluid through said plurality of piping components, at least a portion of said piping components comprising a protective barrier (210) that is coupled to an interior surface (184) of said piping components, said protective barrier configured to form an aluminum oxide.

2. A gas turbine engine lubrication system (100) in accordance with Claim 1 wherein said protective barrier (210) comprises an aluminum alloy tube (220) inserted at least partially within said piping components, said aluminum tube having an outer diameter (226) that is approximately equal to an inner diameter (188) of said piping component (180).

3. A gas turbine engine lubrication system (100) in accordance with Claim 2 wherein said aluminum alloy tube (220) has a thickness (230) that is between approximately 0.010 inch and approximately 0.040 inch.

4. A gas turbine engine lubrication system (100) in accordance with any preceding Claim wherein in said at least one oil supply pump (110) is configured to channel a synthetic lubrication fluid through said plurality of piping components (180).

5. A gas turbine engine lubrication system (100) in accordance with Claim 2 or any claim dependent thereon wherein said plurality of piping components (180) further comprises a plurality of anodized piping components coupled together to form said lubrication system.

6. A gas turbine engine lubrication system (100) in accordance with any preceding Claim wherein said protective barrier (210) comprises an aluminum alloy coating (250) applied to the interior surface (184) of said piping component (180).

7. A gas turbine engine lubrication system (100) in accordance with Claim 6 wherein said aluminum alloy coating (250) is between approximately 0.25 micron and approximately 25 microns in thickness (252).

8. A gas turbine engine (10) comprising;
a plurality of bearings; and
a lube oil supply and scavenge system (100) coupled to said gas turbine engine and configured to lubricate said plurality of bearings, said lube oil supply and scavenge system comprising
at least one sump cavity;
an oil supply source (130); and
a plurality of piping components (180) coupled together to form said oil supply and scavenge system, at least a portion of said piping components comprise a protective barrier (210) that is coupled to an interior surface (184) of said piping components, said protective barrier configured to form an aluminum oxide.

9. A gas turbine engine (10) in accordance with Claim 8 wherein said protective barrier (210) comprises an aluminum alloy tube (220) inserted at least partially within said piping components (180), said aluminum tube having an outer diameter (226) that is approximately equal to an inner diameter (188) of said piping component.

10. A gas turbine engine (10) in accordance with Claim 8 or Claim 9 wherein said plurality of piping components (180) further comprises a plurality of anodized piping components coupled together to form said lubrication system (100).
